# EUROPEAN PATENT SPECIFICATION

(11) **EP 3 357 880 B1**
(45) Date of publication and mention of the grant of the patent: **20.11.2019**
(21) Application number: 17154603.9
(22) Date of filing: 03.02.2017
(51) Int. Cl.: C03C 17/00, C03C 17/22, C03C 17/30, C03C 17/32, C09D 133/08, C09D 183/02, C08L 83/02

(54) **PROTECTIVE COATING COMPOSITION FOR SILICEOUS SUBSTRATES**
SCHUTZBESCHICHTUNGSZUSAMMENSETZUNG FÜR SILIKATISCHEN SUBSTRATEN
COMPOSITION DE REVÊTEMENT DE PROTECTION POUR SUBSTRATS SILICEUX

(43) Date of publication of application: 08.08.2018
(73) Proprietor: 3M Innovative Properties Company, Saint Paul, MN 55133-3427 (US)
(72) Inventor: Schuell, Christoph, 41453 Neuss (DE); Jing, Naiyong, St. Paul, MN 55133-3427 (US)
(74) Representative: Gabriel, Kiroubagaranne

(56) References cited:
- WO-A1-2010/062893
- JP-A- 2002 302 637
- KR-A- 20130 082 300

## Description

### Technical Field

The present disclosure relates generally to the field of protective coatings for siliceous substrates, more specifically to the field of aqueous protective coating compositions for imparting easy-to-clean properties to siliceous substrates. The present disclosure also relates to a method of treating a siliceous substrate.

### Background

Siliceous substrates and materials, such as glass and ceramics, are widely used in the fields of transportation, electronics, architecture, construction, health care, as well as in household appliances and decorative surfaces. Most siliceous surfaces, in particular glass substrates, are particularly susceptible to fogging phenomenon especially when exposed to high humidity environment. Such fogging may severely affect the visual and optical characteristics of the siliceous surfaces. Accordingly, various methods for imparting antifogging properties to such surfaces have been developed. Exemplary methods for providing fogging protection to siliceous surfaces, in particular glass substrates, are described e.g. in US Patent No. 5,976,680 (Ikemori et al.) and in WO 2010/062893 (Xi et al.). The disclosed methods make use of coating compositions comprising hydrophilic polymers, such as e.g. a polyacrylate.

Siliceous substrates, in particular glass substrates, are particularly sensitive to contamination, in particular inorganic and oily contamination. Cleaning and protective compositions for hard surfaces, including siliceous surfaces, are described e.g. in WO 2005/100521 (Evers et al.) and in WO 2005/100520 (Evers et al.). The disclosed cleaning and protective coating compositions are typically liquid aqueous acidic compositions delivering limescale and soap scum benefits on hard surfaces.

Patent KR-A-2013 0082300 describes a coating composition used for coating glass substrates and comprising a polyacrylic acid resinous solution, a silane sol as binder, alcohol-based solvent and water. The silane sol is obtained by hydrolysis and condensation of a blend of trialkoxysilane and tetraalkoxysilane such as tetraethoxysilane TEOS in presence of an acid such as hydrochloric or phosphoric acid. The polyacrylic acid has an average weight molecular weight of 1,000 to 700,000 g/mol.

Patent JP-A-2002 302637 is directed to an aqueous coating composition used for the preparation of a coating having good cleanability and slip properties together with hydrophilicity. The composition comprises tetraethoxysilane, nitric acid, polyacrylic acid having a molecular weight of 150,000 g/mol and water as solvent.

In contrast, protective coating compositions suitable for imparting easy-to-clean properties to a siliceous substrate, in particular suitable for reducing oily contamination from the siliceous substrate are not widely described in the art. Oily contaminants such as fingerprints, stains or marks originating from oily of fat components, are known to be typically found on siliceous substrates, in particular glass substrates. These contaminants present on siliceous substrates, in particular transparent and shiny surfaces, not only detrimentally affect their aesthetic appearance, but may also attract additional dirt such as lint or dust. The ability to remove or clean oily contamination from siliceous substrates is particularly challenging mainly owing to their particular surface anchoring chemistry.

Without contesting the technical advantages associated with the cleaning and protective coating compositions known in the art for siliceous substrates, there is still a need for a protective coating composition providing excellent easy-to-clean properties to siliceous substrates, in particular towards oily contamination. Other advantages of the coating compositions and methods of the disclosure will be apparent from the following description.

### Summary

According to one aspect, the present disclosure is directed to a method of imparting easy-to-clean properties to a siliceous substrate, which comprises the steps of:
a) providing a siliceous substrate;
b) applying a coating composition according to any of claims 1 to 22 to the siliceous substrate thereby forming a layer of the coating composition adjacent to the siliceous substrate; and
c) drying and/or curing the layer of the coating composition thereby forming a coating layer adjacent to the siliceous substrate.

According to still another aspect, the present disclosure relates to the use of a coating composition as described above for imparting easy-to-clean properties to a siliceous substrate.

### Detailed description

The present disclosure relates to an aqueous coating composition for imparting easy-to-clean properties to a siliceous substrate, comprising:
a) a polyacrylic acid having a weight average molecular weight (Mw) greater than 100.000 g/mol;
b) an organic tetrafunctional alkoxysilane;
c) phosphoric acid; and
d) at least 70 wt% of water, based on the weight of the overall coating composition.

In the context of the present disclosure, it has been surprisingly found that a coating composition as described above provides excellent easy-to-clean properties, in particular towards oily contamination, present on siliceous substrates.

Without wishing to be bound by theory, it is believed that this excellent easy-to-clean property is due to the outstanding hydrophilic properties provided by the interconnecting network of polyacrylic acid and condensated tetrafunctional alkoxysilane to the treated siliceous substrates, and which is particularly beneficial for the removal of an oily contamination, in particular with water.

In the context of the present disclosure, the expression "hydrophilic" surface is meant to designate a surface that has the ability to be wet by aqueous solutions. Surfaces on which drops of water or aqueous solutions exhibit an advancing water contact angle of less than 45° will herewith be referred to as "hydrophilic" as per ASTM D7334-08. In contrast, "hydrophobic" surfaces are herewith meant to designate surfaces have an advancing water contact angle of 90° or greater as per ASTM D7334-08.

Advantageously, the coating composition as described above provides outstandingly durable easy-to-clean properties to the treated siliceous substrates. Without wishing to be bound by theory, it is believed that this remarkable mechanical durability of the protective coating composition, in particular against wet mechanical abrasion, is due to the interpenetrating network formed by the polyacrylic acid having a weight average molecular weight (Mw) greater than 100.000 g/mol and the condensated organic tetrafunctional alkoxysilanes promoted by the catalytic phosphoric acid. In this network, it is believed that the condensated alkoxysilanes provide excellent attachment/anchoring to the treated siliceous substrates.

The coating composition of the present disclosure is outstandingly suitable for reducing oily contamination from a siliceous substrate. As such, the protective coating compositions of the present disclosure are particularly suited for imparting "easy-to-clean" or "easy removal" properties to a siliceous substrate, in particular cleaning or removal with water or aqueous cleaning compositions. The coating compositions of the present disclosure may find utility as protective coating for siliceous substrates, in particular glass substrates, encountered in a large variety of articles including those present in household appliances and decorative items, in automotive vehicles, in architecture and construction, or in consumer electronics (touch panels and screens for mobile phones, tablet PCs, and computers).

The coating compositions of the present disclosure provide outstanding easy-to-clean properties with regard to oily contamination on a treated siliceous substrate even upon prolonged exposure to wet environments. The siliceous substrates treated with the coating compositions of the present disclosure are further provided with excellent hydrolytic stability, as the beneficial properties of the coating compositions of the present disclosure may be maintained after prolonged immersion of the coating composition into water. This is particularly surprising as the hydrophilic (co)polymers for use herein are highly water-soluble. This excellent hydrolytic stability reflects the outstanding attachment/anchoring of the interpenetrating network formed by the polyacrylic acid and the condensated alkoxysilanes to the treated siliceous substrate.

The coating composition of the present disclosure comprises, as a first technical feature, a polyacrylic acid having a weight average molecular weight (Mw) greater than 100.000 g/mol.

Unless otherwise stated, the weight average molecular weight of polyacrylic acid for use herein is typically determined using conventional gel permeation chromatography (GPC) techniques well known to those skilled in the art, and described for example, in ASTM MNL17-2ND.

Polyacrylic acid polymers for use herein are not particularly limited. Any polyacrylic acid commonly known in the art may be used in the context of the present disclosure, as long as they fulfill the above-mentioned minimum weight average molecular weight requirement. Suitable polyacrylic acids for use herein will be easily identified by those skilled in the art, in the light of the present description.

Typically, the polyacrylic acid for use herein is the polymerization reaction product of a (co)polymerizable material comprising acrylic (co)monomers. Accordingly, the polyacrylic acid for use herein may be selected from the group of polyacrylic acid (co)polymers, acrylic acid homopolymers, and any combinations, mixtures or salts thereof.

In the context of the present disclosure, it has been surprisingly discovered that coating compositions comprising polyacrylic acids having a weight average molecular weight (Mw) greater than 100.000 g/mol, not only provide advantageous easy-to-clean properties on siliceous substrates, but also provide these coated substrates with improved mechanical durability, in particular against wet mechanical abrasion, when compared to similar coating compositions comprising a hydrophilic (co)polymer having a weight average molecular weight of less than 100.000 g/mol. It is further believed that polyacrylic acids having a weight average molecular weight of at least 100.000 g/mol lead to the forming of more densely packed protective coatings onto the siliceous substrate, due in particular to efficient cross-linking of the coating layer on the treated siliceous substrate.

In a particular aspect of the present disclosure, the polyacrylic acid for use herein has a weight average molecular weight of at least 120.000 g/mol, at least 140.000 g/mol, at least 150.000 g/mol, at least 160.000 g/mol, at least 180.000 g/mol, at least 200.000 g/mol, or even at least 220.000 g/mol.

In another particular aspect, the polyacrylic acid for use in the present disclosure has a weight average molecular weight of no greater than 5.000.000 g/mol, no greater than 1.000.000 g/mol, no greater than 500.000 g/mol, no greater than 400.000 g/mol, no greater than 350.000 g/mol, no greater than 300.000 g/mol, or even no greater than 250.000 g/mol.

In a preferred aspect of the present disclosure, the polyacrylic acid for use herein has a weight average molecular weight comprised between 120.000 g/mol and 1.000.000 g/mol, between 120.000 g/mol and 500.000 g/mol, between 120.000 g/mol and 400.000 g/mol, between 140.000 g/mol and 350.000 g/mol, between 150.000 g/mol and 300.000 g/mol, between 160.000 g/mol and 280.000 g/mol, between 180.000 g/mol and 250.000 g/mol, or even between 200.000 g/mol and 250.000 g/mol.

In a typical aspect, the coating composition according to the present disclosure comprises a polyacrylic acid in an amount greater than 0.25 wt%, greater than 0.5 wt%, greater than 0.75 wt%, greater than 1.0 wt%, greater than 1.25 wt%, greater than 1.50 wt%, greater than 1.75 wt%, greater than 2.0 wt%, greater than 3.0 wt%, greater than 4.0 wt%, or even greater than 5.0 wt%, based on the weight of the overall coating composition.

In another typical aspect, the coating composition according to the present disclosure comprises a polyacrylic acid in an amount greater than 0.25 wt%, greater than 0.5 wt%, greater than 0.75 wt%, greater than 1.0 wt%, greater than 1.25 wt%, greater than 1.50 wt%, greater than 1.75 wt%, greater than 2.0 wt%, greater than 3.0 wt%, greater than 4.0 wt%, or even greater than 5.0 wt%, based on the weight of the overall coating composition.

According to a preferred aspect of the present disclosure, the coating composition comprises a polyacrylic acid in an amount greater than 0.25 wt%, greater than 0.5 wt%, greater than 0.75 wt%, greater than 1.0 wt%, greater than 1.25 wt%, greater than 1.50 wt%, greater than 1.75 wt%, greater than 2.0 wt%, greater than 3.0 wt%, greater than 4.0 wt%, or even greater than 5.0 wt%, based on the weight of the overall coating composition.

According to another preferred aspect of the present disclosure, the coating composition comprises a polyacrylic acid in an amount of less than 10 wt%, less than 8 wt%, less than 6 wt%, less than 5 wt%, less than 4 wt%, or even less than 3 wt%, based on the weight of the overall coating composition.

According to still another preferred aspect of the present disclosure, the coating composition comprises a polyacrylic acid in an amount comprised between 0.25 wt% and 10 wt%, between 0.5 wt% and 8 wt%, between 0.5 wt% and 6 wt%, between 0.8 wt% and 5 wt%, between 0.8 wt% and 4 wt%, between 1.0 wt% and 3 wt%, between 1.0 wt% and 2.5 wt%, or even between 1.0 wt% and 2.0 wt%, based on the weight of the overall coating composition.

The coating composition of the present disclosure comprises, as a further technical feature, an organic tetrafunctional alkoxysilane. Organic tetrafunctional alkoxysilanes for use herein are not particularly limited. Any organic tetrafunctional alkoxysilane commonly known in the art may be used in the context of the present disclosure. Suitable organic tetrafunctional alkoxysilanes for use herein will be easily identified by those skilled in the art, in the light of the present description.

Examples of suitable organic tetrafunctional alkoxysilanes for use herein include organic tetrafunctional alkoxysilanes, wherein the alkyl groups of the organic tetrafunctional alkoxysilane comprise from 1 to 6, from 1 to 4, or even from 1 to 2 carbon atoms.

According to one preferred aspect of the coating composition of the present disclosure, the organic tetrafunctional alkoxysilane for use herein is selected from the group of tetra methoxysilane and tetra ethoxysilane, preferably tetra ethoxysilane.

In the context of the present disclosure, it was found that the presence of organic tetrafunctional alkoxysilanes in the coating compositions, when efficiently condensed with the help of phosphoric acid, helps forming a durable interpenetrating network involving the condensed tetrafunctional alkoxysilanes and the polyacrylic acid polymer.

According to a typical aspect of the present disclosure, the coating composition comprises an organic tetrafunctional alkoxysilane in an amount comprised between 0.25 wt% and 10 wt%, between 0.5 wt% and 8 wt%, between 0.5 wt% and 6 wt%, between 0.8 wt% and 5 wt%, between 0.8 wt% and 4 wt%, between 1.0 wt% and 3 wt%, between 1.0 wt% and 2.5 wt%, or even between 1.0 wt% and 2.0 wt%, based on the weight of the overall coating composition.

In an advantageous aspect of the coating composition of the present disclosure, the (polyacrylic acid : organic tetrafunctional alkoxysilane) weight ratio is comprised between 20:80 and 80:20, between 25:75 and 75:25, between 30:70 and 70:30, between 35:65 and 65:35, between 40:60 and 60:40, or even between 45:55 and 55:45.

In a preferred aspect, the (polyacrylic acid : organic tetrafunctional alkoxysilane) ratio is selected to be 50:50.

According to an advantageous aspect, the coating composition of the present disclosure has a total solid concentration greater than 0.5 wt%, greater than 1.0 wt%, greater than 1.50 wt%, greater than 1.75 wt%, greater than 2.0 wt%, greater than 2.5 wt%, greater than 3.0 wt%, greater than 4.0 wt%, greater than 5.0 wt%, greater than 6.0 wt%, greater than 8.0 wt%, or even greater than 10.0 wt%, based on the weight of the overall coating composition.

The coating composition of the present disclosure comprises phosphoric acid, as a further technical feature.

In a typical aspect, the coating composition comprises phosphoric acid in an amount effective to provide the coating composition with a pH of about 2. The amount of phosphoric acid necessary to achieve a pH of about 2 is typically referred to as a catalytic amount. Suitable amounts of phosphoric acid for use herein will be easily identified by those skilled in the art, in the light of the present description.

In the context of the present disclosure, it was found that the addition of phosphoric acid in the coating compositions not only advantageously affects their stability by improving the solubility of the ingredients present in the coating composition, but also promotes efficient condensation of the organic tetrafunctional alkoxysilane and thereby helps forming a durable interpenetrating network involving the condensed tetrafunctional alkoxysilanes and the polyacrylic acid polymer. Surprisingly still, it has been found that the specific use of phosphoric acid, when compared to other inorganic acids such as e.g. nitric acid or sulfuric acid, provides the coating composition with improved water resistance, in particular to water immersion resistance.

In a typical aspect, the coating composition of the present disclosure has a water content of at least 75 wt%, at least 80 wt%, at least 85 wt%, at least 90 wt%, or even at least 95 wt%, based on the weight of the overall coating composition.

According to a less preferred aspect of the present disclosure, the coating composition further comprises an organic co-solvent, which is preferably a water-miscible solvent.

Examples of suitable water-miscible solvents are primary or secondary mono- or polyalcohols having 1 to 6 carbon atoms, such as e.g. methanol, ethanol, propanol, isopropanol, n-butanol isobutanol, pentanol, hexanol or cyclohexanol. Other suitable water-miscible solvents include water-soluble ethers, such as dipropyleneglycol monomethylether (DPM), 2-butoxy ethanol or diethylene glycol dimethylether (Diglyme).

In a particular aspect, the organic co-solvent is an alcohol. Examples of suitable alcohols for use herein include, but are not limited to, methanol, ethanol, propanol and isopropanol.

According to a beneficial aspect though, the coating composition of the disclosure is substantially free of any co-solvent, in particular an alcohol. In a preferred aspect of the coating composition, the solvent for use herein consists essentially of water, preferably deionized water.

The coating composition of the present disclosure may further comprise optional additives commonly known in the field. Suitable additives will be typically selected depending on the targeted application. Exemplary additives include, but are not limited to, surface-active compounds, corrosion inhibitors, complexing agents, galvanization assistants, coating additives, coloring pigments, chelating agents, detergents, stabilizers, dispersants, enzymes, dyes or perfumes.

The coating composition according to the present disclosure may be obtained according to techniques commonly known in the art. In a typical aspect, the coating composition is obtained by simply mixing the various ingredients - including the hydrophilic (co)polymer and optionally, the multivalent metal salt - into the solvent. The hydrophilic (co)polymer may be obtained by commonly known polymerization techniques or may be commercially purchased and used as such.

The coating compositions of the present disclosure may be in the form of a solution, emulsion, suspension, dispersion or aerosol, depending on the targeted application. According to a typical aspect, the coating composition is in the form of an aqueous solution.

Suitable siliceous substrates for use herein will be easily identified by those skilled in the art, in the light of the present description. According to an advantageous aspect, the siliceous substrate for use herein is selected from the group consisting of glass, glass containing substrates, ceramics and silicate surfaces. In a preferred aspect, the siliceous substrate for use herein is selected from the group consisting of glass and glass containing substrates.

The coating composition of the present disclosure is outstandingly suitable for reducing oily contamination from the siliceous substrate.

Oily contamination for use herein are not particularly limited. Any oily contamination commonly encountered on siliceous substrates, in particular glass substrates, present for example in articles or parts present in household appliances and decorative items, in automotive vehicles, in architecture and construction, or in consumer electronics (touch panels and screens for mobile phones, tablet PCs, and computers), may be envisaged in the context of the present disclosure.

Suitable oily contamination envisaged herein will be easily identified by those skilled in the art, in the light of the present description. Exemplary oily contamination for use herein include, but are not limited to, stains originating from oily or fat components.

In a particular aspect of the coating composition according to the disclosure, the oily contamination takes the form of a stain originating from oily or fat components selected from group consisting of moisturizing creams, body protection creams, sun creams, facial creams, therapeutic creams, human body fat, edible fat, edible oil, food oil, and any combinations or mixtures thereof.

According to a preferred aspect, the oily contamination takes the form of a fingerprint.

The present disclosure is directed to a method of treating a siliceous substrate, which comprises the steps of:
a) providing a siliceous substrate;
b) applying a coating composition as described above to the siliceous substrate thereby forming a layer of the coating composition adjacent to the siliceous substrate; and
c) drying and/or curing the layer of the coating composition thereby forming a coating layer adjacent to the siliceous substrate.

The step of applying the coating composition may be performed according to techniques commonly known in the art. Suitable application methods depend on the number, size and shape of the siliceous substrate to be treated, and are not particularly limited. Exemplary applications techniques include, but are not limited to, spraying, rolling, wiping or dipping. In a particular aspect, the step of applying the coating composition is performed by wiping or dipping.

The step of applying the coating composition may comprise a plurality of individual process steps, including pretreatment steps of the siliceous substrate. For example, the siliceous substrate may be cleaned with a suitable preparation before treatment or treated with a suitable physical surface treatment such as e.g. corona or plasma treatment. The siliceous substrate may be appropriately washed after and between such pre-treatment steps.

After the step of applying the coating composition, the treated siliceous substrate may be allowed to drip off to remove the excess of coating compositions. The excess coating composition and any resulting residues may alternatively be removed by means of a wipe, a squeegee or doctor blade. As an additional, but optional step, the layer of coating composition formed onto the siliceous substrate after the application step may be subjected to a drying and/or curing step. The drying and/or curing may be performed according to techniques well known in the art. Suitable drying and/or curing may be performed at room temperature or at elevated temperature, typically at temperatures comprised between 20°C and 210°C, in particular between 20°C and 180°C. Conditions and temperatures for performing the drying and/or curing step may be appropriately chosen by the person skilled in the art. A typical drying and/or curing step may be performed e.g. in an appropriate oven.

In a typical aspect of the present disclosure, the drying/curing step for use herein, in particular the curing step, is performed at elevated temperatures typically comprised between 50°C and 160°C, between 70°C and 150°C, between 80°C and 140°C, between 80°C and 120°C, or even between 85°C and 110°C.

In still another aspect, the present disclosure is directed to a method of imparting easy-to-clean properties to a siliceous substrate, which comprises the steps of:
a) providing a siliceous substrate;
b) applying a coating composition as described above to the siliceous substrate thereby forming a layer of the coating composition adjacent to the siliceous substrate; and
c) drying and/or curing the layer of the coating composition thereby forming a coating layer adjacent to the siliceous substrate.

In yet another aspect of the present disclosure, it is provided a method of reducing oily contamination from a siliceous substrate, which comprises the steps of:
a) providing a siliceous substrate;
b) applying a coating composition according to any of claims 1 to 23 to the siliceous substrate thereby forming a layer of the coating composition adjacent to the siliceous substrate; and
c) drying and/or curing the layer of the coating composition thereby forming a coating layer adjacent to the siliceous substrate.

All particular and preferred aspects relating to, in particular, the polyacrylic acid, organic tetrafunctional alkoxysilane, the phosphoric acid, the siliceous substrate and the oily contamination as described above in the context of the coating composition, are fully applicable to the description of the methods of the present disclosure, as described above.

The coated article comprises a siliceous substrate and a coating layer adjacent to the siliceous substrate, wherein the coating layer comprises a layer of the coating composition as described above which has been dried and/or cured onto the siliceous substrate.

The coated article of the present disclosure has a static water contact angle of less than 20°, less than 15°, less than 10°, or even less than 5°, when measured according to the static water contact angle measurement method described in the experimental section.

Advantageously, the coated article of the present disclosure has a static water contact angle of less than 25°, less than 20°, less than 15°, less than 10°, or even less than 5°, after 10 wet mechanical abrasion cycles when measured according to the wet abrasion test method described in the experimental section.

Preferably, the coated article of the present disclosure has a static water contact angle of less than 30°, less than 25°, less than 20°, less than 15°, less than 10°, or even less than 5°, after 50 wet mechanical abrasion cycles when measured according to the wet abrasion test method described in the experimental section.

More preferably, the coated article of the present disclosure has a static water contact angle of less than 20°, less than 15°, less than 10°, or even less than 5°, when measured according to the water resistance test method described in the experimental section.

The present disclosure relates to an article having easy-to-clean properties, which comprises a siliceous substrate and a coating layer adjacent to the siliceous substrate, wherein the coating layer comprises a layer of the coating composition as described above which has been dried and/or cured onto the siliceous substrate.

All particular and preferred aspects relating to, in particular, the polyacrylic acid, organic tetrafunctional alkoxysilane, the phosphoric acid, the siliceous substrate and the oily contamination as described above in the context of the coating composition, are fully applicable to the description of the coated article and article of the present disclosure, as described above.

According to another aspect, the present disclosure relates to the use of a coating composition as described above for imparting easy-to-clean properties to a siliceous substrate.

In yet another aspect, the present disclosure relates to the use of a coating composition as described above for reducing oily contamination from a siliceous substrate.

All particular and preferred aspects relating to, in particular, the polyacrylic acid, organic tetrafunctional alkoxysilane, the phosphoric acid, the siliceous substrate and the oily contamination as described above in the context of the coating composition, are fully applicable to the description of uses of the present disclosure, as described above.

### EXAMPLES

The present disclosure is further illustrated by the following examples. These examples are merely for illustrative purposes only and are not meant to be limiting on the scope of the appended claims.

### Test methods and procedures:

### Contact Angle Measurement

Static contact angle measurements are performed using Millipore water with a Krüss DSA100 contact angle analyzer. Contact angle is measured on sessile drop (3 µL) and is measured 30 sec after deposition. The values reported are the average of at least 3 separate measurements.

### Mechanical wet abrasion testing (Durability testing)

Abrasion tests are performed on a 5900 Reciprocating Abraser (available from Taber Industries) by employing a 5N force and a velocity of 60 cycles/minutes. The cloth used for the abrasion cycles is a 13.5 crockmeter cloth (crockmeter squares, 100% cotton) wetted with deionized water. The durability of the coatings is measured after subjecting the coating to various wet abrasion wipes (10x or 50x) followed by static water contact angle measurements as detailed above.

### Water-Resistance testing

Coated Substrates are immerged in a jar filled with deionized water, equipped with a magnetic stirring bar. Coated substrates are left standing in the bath overnight before removal and drying on air for one day, followed by static water contact angle measurements.

### Easy-to-Clean testing: Dipping into water

Three drops of sunflower oil (purchased from ALDI, Germany) colored with Oil Red (purchased from Sigma-Aldrich) are placed on a coated and a non-coated substrate. The substrates are immerged into a beaker filled with 200 mL of tap water for 15 sec and removed. The easy-to-clean performance is assessed by visual inspection of the substrates after immersion. The two-scale rating is defined as follows: poor (no complete removal of the oily contamination) to good (complete removal of the oily contamination).

### Easy-to-Clean testing: Rinsing with water

Three drops of sunflower oil (purchased from ALDI, Germany) colored with Oil Red (purchased from Sigma Aldrich) are placed on a coated and a non-coated substrate. Then, 15 mL of de-ionized water are rinsed over the substrate to remove to oil contamination. The easy-to-clean performance is assessed by visual inspection of the substrates after immersion. The two-scale rating is defined as follows: poor (no complete removal of the oily contamination) to good (complete removal of the oily contamination).

### Materials employed:

In the examples, the following raw materials are used:
**Poly(acrylic acid)** (PAA-225) is a sodium salt of poly(acrylic acid) having a weight average molecular weight of 225.000 g/mol, commercially available as a 20% solution in water from Polysciences Europe, Edenkoben, Germany.

**Poly(acrylic acid)** (PAA-50) is a poly(acrylic acid) having a weight average molecular weight of 50.000 g/mol, commercially available as a 25% solution in water from Polysciences Europe, Edenkoben, Germany.

**Phosphoric acid** is obtained from Sigma-Aldrich.
**Nitric acid** is obtained from Sigma-Aldrich.
**Sulfonic acid** is obtained from Sigma-Aldrich.
**Tetraethyl orthosilicate (TEOS)** is obtained from Sigma-Aldrich. **3-Aminopropyltriethoxysilane (APTES)** is commercially available from Sigma-Aldrich. **Sunflower oil,** commercially available from Aldi (Germany).
**Oil Red O** is a dye, commercially available from Sigma-Aldrich.
All performance testing are performed on glass substrates (obtained by Rocholl GmbH, Germany) having suitable dimensions (typically 10x10cm).

### Preparation of the coating compositions:

The coating compositions are typically prepared at a 10g scale, by first adding an aqueous solution of poly(acrylic acid) into de-ionized water placed in an vial. The mixture is then gently mixed so as to dissolve the polymer. Next, the organic tetrafunctional alkoxysilane and phosphoric acid (typically in an amount effective to provide the coating composition with a pH of about 2) are added and the mixture is stirred for at least 30 min and until one homogenous phase is obtained.

### Coating procedure and curing:

Nine drops of the coating solution are applied evenly distributed on the non-tin-side of the float glass substrate, followed by gentle wiping with a paper tissue (KimWipe by Kimberly-Clarck) to homogenously distribute the coating on the surface. The coated substrate is then placed in an oven (Heraeus, Germany) for 10 min at 100°C.

### Examples:

Various compositions according to the present disclosure are described in Table 1 below.

**Table 1:**

| Compositions (disclosure) | 1 | 2 | 3 | 4 |
|---|---|---|---|---|
| PAA-225 (wt%) | 2.25 | 0.75 | 1.5 | 5.0 |
| TEOS (wt%) | 0.75 | 2.25 | 1.5 | 5.0 |
| Ratio PAA:TEOS (wt%) | 75:25 | 25:75 | 50:50 | 50:50 |
| H₃P0₄ ^{(*)} | Cat. | Cat. | Cat. | Cat. |
| Total solid concentration (wt%) | 3 | 3 | 3 | 10 |

| | | | | |
|---|---|---|---|---|
| (*) catalytic amount to provide the composition with a pH of 2. | | | | |

Various comparative compositions (not according to the present disclosure) are described in Table 2 below. Composition C1 does not comprise any phosphoric acid. Composition C2 comprise a polyacrylic acid having a weight average molecular weight (M_{w}) lower than 100.000 g/mol. Composition C3 comprises a trifunctional silane. Composition C4 comprises nitric acid instead of phosphoric acid. Composition C5 comprises sulfuric acid instead of phosphoric acid.

**Table 2:**

| Comparative compositions | C1 | C2 | C3 | C4 | C5 |
|---|---|---|---|---|---|
| PAA-225 (wt%) | 1.5 | - | 1.5 | 1.5 | 1.5 |
| PAA-50 (wt%) | - | 1.5 | - | - | - |
| TEOS (wt%) | 1.5 | 1.5 | - | 1.5 | 1.5 |
| APTES (wt%) | - | - | 1.5 | - | - |
| Ratio PAA:TEOS (wt%) | 50:50 | 50:50 | 50:50 | 50:50 | 50:50 |
| H₃P0₄ ^{(*)} | - | Cat. | Cat. | - | - |
| HNO₃ ^{(*)} | - | - | - | Cat. | - |
| h₂SO₄ ^{(*)} | - | - | - | - | Cat. |
| Total solid concentration (wt%) | 3 | 3 | 3 | 3 | 3 |

| | | | | | |
|---|---|---|---|---|---|
| (*) catalytic amount to provide the composition with a pH of 2. | | | | | |

### Examples 1 to 8:

### Examples E1 to E4 and comparative examples CE1 to CE5: hydrophilic properties and wet mechanical abrasion resistance.

Examples E1 to E4 are examples using compositions according to the disclosure. Examples CE1 to CE5 are comparative examples. The coating formulations used in the experiments are applied on a glass plate. The data presented in Table 3 reflect the hydrophilic properties and wet mechanical abrasion resistance of the various coating compositions.

**Table 3:**

| Example | Composition | Water contact angle [°] | Water contact angle [°] | |
|---|---|---|---|---|
| | | | Wet mechanical abrasion 10 cycles | Wet mechanical abrasion 50 cycles |
| E1 | 1 | 8 | <5 | - |
| E2 | 2 | <5 | 7 | - |
| E3 | 3 | <5 | 8 | 8 |
| E4 | 4 | 7 | 7 | <5 |
| CE1 | C1 | 29 | - | - |
| CE2 | C2 | 7 | 13 | - |
| CE3 | C3 | 37 | - | - |
| CE4 | C4 | 7 | 11 | 12 |
| CE5 | C5 | 9 | 13 | 14 |

As shown in Table 3, protective coating compositions according to the present disclosure combine both excellent hydrophilic and wet mechanical abrasion resistance properties (WCA < 10°). In contrast, coating compositions not according to the disclosure are deficient in either hydrophilic or wet mechanical abrasion resistance properties.

### Example E5 and comparative examples CE6 to CE7: water resistance.

Example E5 is an example using a composition according to the disclosure. Examples CE6 to CE7 are comparative examples. The coating formulations used in the experiments are applied on a glass plate and tested according to the water resistance test described above. The data presented in Table 4 reflect the water immersion resistance of the various coating compositions.

**Table 4:**

| Example | Composition | Water contact angle [°] (overnight immersion) |
|---|---|---|
| E5 | 3 | <5 |
| CE6 | C4 | 20 |
| CE7 | C5 | 11 |

As shown in Table 4, a protective coating composition according to the present disclosure has excellent water immersion resistance (WCA < 5°). In contrast, coating compositions not according to the disclosure have a WCA above 10° after overnight water immersion.

### Example E6 and comparative example CE8: easy-to-clean properties.

Example E6 is an example using a composition according to the disclosure. Example CE8 is an uncoated glass panel control. The coating formulations used in the experiments are applied on a glass plate and tested according to the easy-to-clean test method (dipping and rinsing) described above. The data presented in Table 5 reflect the easy-to-clean performance of the various coating compositions.

**Table 5:**

| Example | Composition | Easy-to-clean performance (rating by visual assessment) | |
|---|---|---|---|
| | | Dipping into water (15 sec) | Rinsing with water |
| E6 | 3 | good | good |
| CE8 | none-uncoated | poor | poor |

As shown in Table 5, a protective coating composition according to the present disclosure has excellent easy-to-clean performance both under dipping and rinsing conditions. In contrast, an uncoated glass panel control has poor easy-to-clean performance.

## Claims

1. A method of imparting easy-to-clean properties to a siliceous substrate, which comprises the steps of:
a) providing a siliceous substrate;
b) applying a coating composition to the siliceous substrate thereby forming a layer of the coating composition adjacent to the siliceous substrate, wherein the coating composition comprises:
i. a polyacrylic acid having a weight average molecular weight (M_{w}) greater than 100.000 g/mol;
ii. an organic tetrafunctional alkoxysilane;
iii. phosphoric acid; and
iv. at least 70 wt% of water, based on the weight of the overall coating composition; and
c) drying and/or curing the layer of the coating composition thereby forming a coating layer adjacent to the siliceous substrate.

2. A method according to claim 1, wherein the polyacrylic acid has a weight average molecular weight comprised between 120.000 g/mol and 1.000.000 g/mol, between 120.000 g/mol and 500.000 g/mol, between 120.000 g/mol and 400.000 g/mol, between 140.000 g/mol and 350.000 g/mol, between 150.000 g/mol and 300.000 g/mol, between 160.000 g/mol and 280.000 g/mol, between 180.000 g/mol and 250.000 g/mol, or even between 200.000 g/mol and 250.000 g/mol.

3. A method according to claim 1 or 2, wherein the alkyl groups of the organic tetrafunctional alkoxysilane comprise from 1 to 6, from 1 to 4, or even from 1 to 2 carbon atoms.

4. A method according to any of the preceding claims, wherein the organic tetrafunctional alkoxysilane is selected from the group of tetra methoxysilane and tetra ethoxysilane, preferably tetra ethoxysilane.

5. A method according to any of the preceding claims, wherein the coating composition comprises a polyacrylic acid in an amount comprised between 0.25 wt% and 10 wt%, between 0.5 wt% and 8 wt%, between 0.5 wt% and 6 wt%, between 0.8 wt% and 5 wt%, between 0.8 wt% and 4 wt%, between 1.0 wt% and 3 wt%, between 1.0 wt% and 2.5 wt%, or even between 1.0 wt% and 2.0 wt%, based on the weight of the overall coating composition.

6. A method according to any of the preceding claims, wherein the coating composition comprises an organic tetrafunctional alkoxysilane in an amount comprised between 0.25 wt% and 10 wt%, between 0.5 wt% and 8 wt%, between 0.5 wt% and 6 wt%, between 0.8 wt% and 5 wt%, between 0.8 wt% and 4 wt%, between 1.0 wt% and 3 wt%, between 1.0 wt% and 2.5 wt%, or even between 1.0 wt% and 2.0 wt%, based on the weight of the overall coating composition.

7. A method according to any of the preceding claims, wherein the (polyacrylic acid : organic tetrafunctional alkoxysilane) weight ratio is comprised between 20:80 and 80:20, between 25:75 and 75:25, between 30:70 and 70:30, between 35:65 and 65:35, between 40:60 and 60:40, or even between 45:55 and 55:45.

8. A method according to any of the preceding claims, wherein the coating composition has a total solid concentration greater than 0.5 wt%, greater than 1.0 wt%, greater than 1.50 wt%, greater than 1.75 wt%, greater than 2.0 wt%, greater than 2.5 wt%, greater than 3.0 wt%, greater than 4.0 wt%, greater than 5.0 wt%, greater than 6.0 wt%, greater than 8.0 wt%, or even greater than 10.0 wt%, based on the weight of the overall coating composition.

9. A method according to any of the preceding claims, wherein the coating composition comprises phosphoric acid in an amount effective to provide the coating composition with a pH of about 2.

10. A method according to any of the preceding claims, wherein the siliceous substrate is selected from the group consisting of glass, glass containing substrates, ceramics and silicate surfaces.

11. A method according to any of the preceding claims, wherein the siliceous substrate is selected from the group consisting of glass and glass containing substrates.

12. A method according to any of the preceding claims, wherein the coating composition is suitable for reducing oily contamination from the siliceous substrate.

13. Use of a coating composition as described in any of claims 1 to 12 for imparting easy-to-clean properties to a siliceous substrate.

## Patentansprüche

1. Ein Verfahren zum Verleihen von Eigenschaften zur leichten Reinigung für ein siliciumhaltiges Substrat, das die folgenden Schritte umfasst:
a) Bereitstellen eines siliciumhaltigen Substrats;
b) Auftragen einer Beschichtungszusammensetzung auf das siliciumhaltige Substrat, wodurch eine Schicht der Beschichtungszusammensetzung angrenzend an das siliciumhaltige Substrat gebildet wird, wobei die Beschichtungszusammensetzung Folgendes umfasst:
i. eine Polyacrylsäure mit einem gewichtsgemittelten Molekulargewicht (Mw) größer als 100.000 g/mol;
ii. ein organisches tetrafunktionelles Alkoxysilan;
iii. Phosphorsäure; und
iv. mindestens 70 Gew.-% Wasser, bezogen auf das Gewicht der gesamten Beschichtungszusammensetzung; und
c) Trocknen und/oder Härten der Schicht der Beschichtungszusammensetzung, wodurch eine Beschichtungsschicht angrenzend an das siliciumhaltige Substrat gebildet wird.

2. Ein Verfahren nach Anspruch, 1 wobei die Polyacrylsäure ein gewichtsgemitteltes Molekulargewicht aufweist, das zwischen 120.000 g/mol und 1.000.000 g/mol, zwischen 120.000 g/mol und 500.000 g/mol, zwischen 120.000 g/mol und 400.000 g/mol, zwischen 140.000 g/mol und 350.000 g/mol, zwischen 150.000 g/mol und 300.000 g/mol, zwischen 160.000 g/mol und 280.000 g/mol, zwischen 180.000 g/mol und 250.000 g/mol oder sogar zwischen 200.000 g/mol und 250.000 g/mol liegt.

3. Ein Verfahren nach einem der Ansprüche 1 oder 2, wobei die Alkylgruppen des organischen tetrafunktionellen Alkoxysilans von 1 bis 6, von 1 bis 4 oder sogar von 1 bis 2 Kohlenstoffatome umfassen.

4. Ein Verfahren nach einem der vorstehenden Ansprüche, wobei das organische tetrafunktionelle Alkoxysilan ausgewählt ist aus der Gruppe von Tetramethoxysilan und Tetraethoxysilan, vorzugsweise Tetraethoxysilan.

5. Ein Verfahren nach einem der vorstehenden Ansprüche, wobei die Beschichtungszusammensetzung eine Polyacrylsäure in einer Menge zwischen 0,25 Gew.-% und 10 Gew.-%, zwischen 0,5 Gew.-% und 8 Gew.-%, zwischen 0,5 Gew.-% und 6 Gew.-%, zwischen 0,8 Gew.-% und 5 Gew.-%, zwischen 0,8 Gew.-% und 4 Gew.-%, zwischen 1,0 Gew.-% und 3 Gew.-%, zwischen 1,0 Gew.-% und 2,5 Gew.-% oder sogar zwischen 1,0 Gew.-% und 2,0 Gew.-%, bezogen auf das Gewicht der gesamten Beschichtungszusammensetzung, umfasst.

6. Ein Verfahren nach einem der vorstehenden Ansprüche, wobei die Beschichtungszusammensetzung ein organisches tetrafunktionelles Alkoxysilan in einer Menge zwischen 0,25 Gew.-% und 10 Gew.-%, zwischen 0,5 Gew.-% und 8 Gew.-%, zwischen 0,5 Gew.-% und 6 Gew.-%, zwischen 0,8 Gew.-% und 5 Gew.-%, zwischen 0,8 Gew.-% und 4 Gew.-%, zwischen 1,0 Gew.-% und 3 Gew.-%, zwischen 1,0 Gew.-% und 2,5 Gew.-% oder sogar zwischen 1,0 Gew.-% und 2,0 Gew.-%, bezogen auf das Gewicht der gesamten Beschichtungszusammensetzung, umfasst.

7. Ein Verfahren nach einem der vorstehenden Ansprüche, wobei das (Polyacrylsäure: organisches tetrafunktionelles Alkoxysilan)-Gewichtsverhältnis zwischen 20:80 und 80:20, zwischen 25:75 und 75:25, zwischen 30:70 und 70:30, zwischen 35:65 und 65:35, zwischen 40:60 und 60:40 oder sogar zwischen 45:55 und 55:45 liegt.

8. Ein Verfahren nach einem der vorstehenden Ansprüche, wobei die Beschichtungszusammensetzung eine Feststoffgesamtkonzentration größer als 0,5 Gew.-%, größer als 1,0 Gew.-%, größer als 1,50 Gew.-%, größer als 1,75 Gew.-%, größer als 2,0 Gew.-%, größer als 2,5 Gew.-%, größer als 3,0 Gew.-%, größer als 4,0 Gew.-%, größer als 5,0 Gew.-%, größer als 6,0 Gew.-%, größer als 8,0 Gew.-%, oder sogar größer als 10,0 Gew.-%, bezogen auf das Gewicht der gesamten Beschichtungszusammensetzung, aufweist.

9. Ein Verfahren nach einem der vorstehenden Ansprüche, wobei die Beschichtungszusammensetzung Phosphorsäure in einer Menge umfasst, die wirksam ist, um die Beschichtungszusammensetzung mit einem pH-Wert von etwa 2 bereitzustellen.

10. Ein Verfahren nach einem der vorstehenden Ansprüche, wobei das siliciumhaltige Substrat aus der Gruppe bestehend aus Glas, Glas enthaltenden Substraten, Keramik und Silikatoberflächen ausgewählt ist.

11. Ein Verfahren nach einem der vorstehenden Ansprüche, wobei das siliciumhaltige Substrat aus der Gruppe bestehend aus Glas und Glas enthaltenden Substraten ausgewählt ist.

12. Ein Verfahren nach einem der vorstehenden Ansprüche, wobei die Beschichtungszusammensetzung zur Verringerung öliger Verunreinigung von dem siliciumhaltigen Substrat geeignet ist.

13. Verwendung einer Beschichtungszusammensetzung wie in einem der Ansprüche 1 bis 12 beschrieben zum Verleihen von Eigenschaften zur leichten Reinigung für ein kieselsäurehaltiges Substrat.

## Revendications

1. Procédé permettant de conférer des propriétés de facilité de nettoyage à un substrat siliceux, qui comprend les étapes consistant à :
a) fournir un substrat siliceux ;
b) appliquer une composition de revêtement sur le substrat siliceux formant de ce fait une couche de la composition de revêtement adjacente au substrat siliceux, dans lequel la composition de revêtement comprend :
i. un acide polyacrylique ayant une masse moléculaire moyenne en poids (M_{w}) supérieure à 100 000 g/mol ;
ii. un alcoxysilane tétrafonctionnel organique ;
iii. de l'acide phosphorique ; et
iv. au moins 70 % en poids d'eau, en fonction du poids de la composition de revêtement globale ; et
c) sécher et/ou durcir la couche de la composition de revêtement formant de ce fait une couche de revêtement adjacente au substrat siliceux.

2. Procédé selon la revendication 1, dans lequel l'acide polyacrylique a une masse moléculaire moyenne en poids comprise entre 120 000 g/mol et 1 000 000 g/mol, entre 120 000 g/mol et 500 000 g/mol, entre 120 000 g/mol et 400 000 g/mol, entre 140 000 g/mol et 350 000 g/mol, entre 150 000 g/mol et 300 000 g/mol, entre 160 000 g/mol et 280 000 g/mol, entre 180 000 g/mol et 250 000 g/mol, voire entre 200 000 g/mol et 250 000 g/mol.

3. Procédé selon la revendication 1 ou 2, dans lequel les groupes alkyle de l'alcoxysilane tétrafonctionnel organique comprennent de 1 à 6, de 1 à 4, voire de 1 à 2 atomes de carbone.

4. Procédé selon l'une quelconque des revendications précédentes, dans lequel l'alcoxysilane tétrafonctionnel organique est choisi dans le groupe du tétra méthoxysilane et du tétra éthoxysilane, de préférence le tétra éthoxysilane.

5. Procédé selon l'une quelconque des revendications précédentes, dans lequel la composition de revêtement comprend un acide polyacrylique en une quantité comprise entre 0,25 % en poids et 10 % en poids, entre 0,5 % en poids et 8 % en poids, entre 0,5 % en poids et 6 % en poids, entre 0,8 % en poids et 5 % en poids, entre 0,8 % en poids et 4 % en poids, entre 1,0 % en poids et 3 % en poids, entre 1,0 % en poids et 2,5 % en poids, voire entre 1,0 % en poids et 2,0 % en poids, en fonction du poids de la composition de revêtement globale.

6. Procédé selon l'une quelconque des revendications précédentes, dans lequel la composition de revêtement comprend un alcoxysilane tétrafonctionnel organique en une quantité comprise entre 0,25 % en poids et 10 % en poids, entre 0,5 % en poids et 8 % en poids, entre 0,5 % en poids et 6 % en poids, entre 0,8 % en poids et 5 % en poids, entre 0,8 % en poids et 4 % en poids, entre 1,0 % en poids et 3 % en poids, entre 1,0 % en poids et 2,5 % en poids, voire entre 1,0 % en poids et 2,0 % en poids, en fonction du poids de la composition de revêtement globale.

7. Procédé selon l'une quelconque des revendications précédentes, dans lequel le (acide polyacrylique : alcoxysilane tétrafonctionnel organique) rapport pondéral est compris entre 20:80 et 80:20, entre 25:75 et 75:25, entre 30:70 et 70:30, entre 35:65 et 65:35, entre 40:60 et 60:40, voire entre 45:55 et 55:45.

8. Procédé selon l'une quelconque des revendications précédentes, dans lequel la composition de revêtement a une concentration totale en matières solides supérieure à 0,5 % en poids, supérieure à 1,0 % en poids, supérieure à 1,50 % en poids, supérieure à 1,75 % en poids, supérieure à 2,0 % en poids, supérieure à 2,5 % en poids, supérieure à 3,0 % en poids, supérieure à 4,0 % en poids, supérieure à 5,0 % en poids, supérieure à 6,0 % en poids, supérieure à 8,0 % en poids, voire supérieure à 10,0 % en poids, en fonction du poids de la composition de revêtement globale.

9. Procédé selon l'une quelconque des revendications précédentes, dans lequel la composition de revêtement comprend de l'acide phosphorique en une quantité efficace pour fournir la composition de revêtement avec un pH d'environ 2.

10. Procédé selon l'une quelconque des revendications précédentes, dans lequel le substrat siliceux est choisi dans le groupe constitué du verre, de substrats contenant du verre, de céramiques et de surfaces de silicate.

11. Procédé selon l'une quelconque des revendications précédentes, dans lequel le substrat siliceux est choisi dans le groupe constitué du verre et de substrats contenant du verre.

12. Procédé selon l'une quelconque des revendications précédentes, dans lequel la composition de revêtement est appropriée pour réduire la contamination huileuse du substrat siliceux.

13. Utilisation d'une composition de revêtement telle que décrite dans l'une quelconque des revendications 1 à 12 pour conférer des propriétés de facilité de nettoyage à un substrat siliceux.
